# EUROPEAN PATENT APPLICATION

(11) **EP 1 341 197 A2**
(43) Date of publication of application: **03.09.2003**
(21) Application number: 03003236.1
(22) Date of filing: 21.02.2003
(51) Int. Cl.: H01G 9/20, C25D 3/02

(54) **Film of fine semiconductor particles for a photoelectrochemical cell**

(30) Priority: 28.02.2002 JP 2002054217; 28.02.2002 JP 2002054218
(71) Applicant: FUJI PHOTO FILM CO., LTD., Kanagawa 250-01 (JP)
(72) Inventor: Watanabe, Tetsuya, Fuji Photo Film Co., Ltd., Minami-Ashigara-shi, Kanagawa-ken (JP); Yoshikawa, Masaru, Fuji Photo Film Co., Ltd., Minami-Ashigara-shi, Kanagawa-ken (JP)
(74) Representative: Patentanwälte Dr. Solf & Zapf

(57) **Abstract**

A photoelectric conversion device having a conductive support and a photosensitive layer formed on the conductive support, said photosensitive layer being composed of a layer of dye-adsorbed, fine semiconductor particles, and a metal oxide layer formed thereon by cathodic electrodeposition. The layer of fine semiconductor particles has a roughness factor of 10 or more.

## Description

### FIELD OF THE INVENTION

The present invention relates to a method for producing a film of fine semiconductor particles, a photoelectric conversion device comprising such a film of fine semiconductor particles and its production method, and further to a photoelectric conversion device comprising fine semiconductor particles sensitized by a dye and its production method, and a photoelectric cell comprising such a photoelectric conversion device.

### BACKGROUND OF THE INVENTION

Some semiconductors such as titanium oxide are known as n-type semiconductors, which have characteristics of emitting electrons upon receiving light, etc. Because of such characteristics, n-type semiconductors are widely used for photocatalysts, etc., and investigation has been conducted to use them as materials for photoelectric conversion devices. Put into practical use are various types of photoelectric conversion devices, such as those using metals, those using semiconductors, those using organic pigments or dyes, combinations thereof.

U.S. Patents 4,927,721, 4,684,537, 5,084,365, 5,350,644, 5,463,057 and 5,525,440, WO 98/50393, JP 7-249790 A and JP 10-504521 A disclose photoelectric conversion devices utilizing fine semiconductor particles sensitized by dyes, and materials and producing methods for making such photoelectric conversion devices. A photoelectric conversion device comprising fine semiconductor particles sensitized by a dye is referred to as a dye-sensitized photoelectric conversion device hereinafter. The dye-sensitized photoelectric conversion device is advantageous because it can be produced at relatively low costs using an inexpensive oxide such as titanium dioxide without high purification. However, the conventional, dye-sensitized photoelectric conversion devices do not necessarily have sufficiently high photoelectric conversion efficiency. It is thus highly desired to develop a dye-sensitized photoelectric conversion device exhibiting improved photoelectric conversion efficiency.

### OBJECTS OF THE INVENTION

Accordingly, an object of the present invention is to provide a method for producing a film of fine semiconductor particles useful for a photoelectric conversion device, etc.

Another object of the present invention is to provide a dye-sensitized photoelectric conversion device exhibiting excellent photoelectric conversion efficiency and a method for producing it.

A still further object of the present invention is to provide a photoelectric cell comprising such a photoelectric conversion device.

### SUMMARY OF THE INVENTION

As a result of intense research in view of the above objects, the inventors have found that by using a porous film of fine semiconductor particles having a metal oxide layer formed thereon by cathodic electrodeposition as a photosensitive layer, the conversion efficiency of the photoelectric conversion device is improved. The present invention has been accomplished by this finding.

Thus, the photoelectric conversion device of the present invention comprises a conductive support, and a photosensitive layer formed on the conductive support, the photosensitive layer being composed of a layer of dye-adsorbed, fine semiconductor particles and a metal oxide layer formed thereon by cathodic electrodeposition.

The method of the present invention for producing a photoelectric conversion device having a photosensitive layer containing dye-adsorbed, fine semiconductor particles on a conductive support is characterized by forming a metal oxide layer on the layer of fine semiconductor particles by cathodic electrodeposition.

The method of the present invention for produced a film of fine semiconductor particles is characterized by forming a metal oxide layer by cathodic electrodeposition on a porous layer of fine semiconductor particles having a roughness factor of 10 or more.

The photoelectric conversion device of the present invention having a photosensitive layer on a conductive support is characterized in that the photosensitive layer is composed of a porous layer of fine semiconductor particles having a roughness factor of 10 or more, and a metal oxide layer formed on the porous layer of fine semiconductor particles by cathodic electrodeposition, and that a dye is adsorbed onto the porous layer of fine semiconductor particles.

The method of the present invention for produced a photoelectric conversion device having a photosensitive layer on a conductive support comprises the steps of (a) forming a porous layer of fine semiconductor particles having a roughness factor of 10 or more on the conductive support, (b) forming a metal oxide layer on the porous layer of fine semiconductor particles by cathodic electrodeposition, and then (c) causing a dye to be adsorbed onto the porous layer of fine semiconductor particles, thereby forming the photosensitive layer.

The photoelectric cell of the present invention comprises the above photoelectric conversion device.

The metal oxide layer is preferably made of zinc oxide or titanium dioxide. The metal oxide layer is preferably formed by cathodic electrodeposition in a titanium tetranitrate solution.

The above porous layer of fine semiconductor particles is preferably made of an oxide semiconductor, such as titanium oxide, zinc oxide, niobium oxide, tin oxide, tungsten oxide, indium oxide, zirconium oxide or strontium titanate, etc. The metal oxide layer formed by cathodic electrodeposition is preferably made of zinc oxide or titanium oxide. When a titanium oxide layer is formed, the layer of fine semiconductor particles formed on the conductive support is preferably immersed in a titanium tetranitrate solution and subjected to cathodic electrodeposition. In the production of the photoelectric conversion device, it is preferable that a dye is dissolved in an electrolyte in advance. The dye is preferably a ruthenium complex dye.

### BRIEF DESCRIPTION OF THE DRAWINGS

Fig. 1 is a partial cross sectional view showing the structure of a photoelectric conversion device according to an embodiment of the present invention;
Fig. 2 is a partial cross sectional view showing the structure of a photoelectric conversion device according to another embodiment of the present invention;
Fig. 3 is a partial cross sectional view showing the structure of a photoelectric conversion device according to a further embodiment of the present invention;
Fig. 4 is a partial cross sectional view showing the structure of a photoelectric conversion device according to a still further embodiment of the present invention;
Fig. 5 is a partial cross sectional view showing the structure of a photoelectric conversion device according to a still further embodiment of the present invention;
Fig. 6 is a partial cross sectional view showing the structure of a photoelectric conversion device according to a still further embodiment of the present invention;
Fig. 7 is a partial cross sectional view showing the structure of a photoelectric conversion device according to a still further embodiment of the present invention;
Fig. 8 is a partial cross sectional view showing the structure of a photoelectric conversion device according to a still further embodiment of the present invention;
Fig. 9 is a partial cross sectional view showing the structure of a photoelectric conversion device according to a still further embodiment of the present invention; and
Fig. 10 is a partial cross sectional view showing the structure of the photoelectric conversion device produced in Examples.

### DETAILED DESCRIPTION OF THE PREFERRED EMBODIMENTS

### [ 1 ] Production of film of fine semiconductor particles

The method of the present invention for producing a film of fine semiconductor particles comprises the steps of forming a metal oxide layer on a porous layer of fine semiconductor particles by cathodic electrodeposition (cathodic electrodeposition step). The film of fine semiconductor particles obtained by the method of the present invention is useful for photocatalyst films such as a contamination-preventing membrane and an ultrahydrophilic membrane, photoelectric conversion devices, etc. Explanation will be made in detail below with respect to a case where the film of fine semiconductor particles is used for a photosensitive layer of a photoelectric conversion device.

### (A) Fine semiconductor particle layer

### (1) Semiconductor

Usable as the semiconductor for forming a film of fine semiconductor particles that is preferably porous are simple semiconductors such as silicon and germanium; III-V series compound semiconductors; metal chalcogenides such as metal oxides, metal sulfides and metal selenides; compounds having a perovskite structure such as strontium titanate, calcium titanate, sodium titanate, barium titanate and potassium niobate; etc. Oxide semiconductors are preferable among them.

Examples of the metal chalcogenides include oxides of titanium, tin, zinc, iron, tungsten, zirconium, hafnium, strontium, indium, cerium, yttrium, lanthanum, vanadium, niobium or tantalum; sulfides of cadmium, zinc, lead, silver, antimony or bismuth; selenides of cadmium or lead; cadmium telluride; etc. Additionally, compound semiconductors such as phosphides of zinc, gallium, indium or cadmium, selenides of gallium-arsenic or copper-indium, copper-indium sulfide, etc. may be used in the present invention.

The oxide semiconductor is preferably titanium oxide, zinc oxide, niobium oxide, tin oxide, tungsten oxide, indium oxide, zirconium oxide or strontium titanate, more preferably titanium oxide or niobium oxide, particularly titanium oxide. Known as the crystal forms of titanium oxide are an anatase-type, a rutile-type, a brookite-type, etc., and titanium oxide used in the present invention may have any of these crystal forms.

The semiconductor used in the present invention may have a monocrystalline or polycrystalline structure. The semiconductor is preferably monocrystalline from the viewpoint of conversion efficiency, while the semiconductor is preferably polycrystalline from the viewpoints of production cost, stable supply of raw materials, energy-payback time, etc. When the semiconductor is in a polycrystalline form, it is particularly preferable to form a porous film composed of fine semiconductor particles. The semiconductor used in the present invention may partly contain an amorphous semiconductor.

The particle size of the fine semiconductor particles is generally on the level of nm to µm. The average size of primary semiconductor particles, which is determined by averaging the diameters of circles equivalent to projected areas thereof, is preferably 5 nm to 200 nm, more preferably 8 nm to 100 nm. Further, the average size of secondary semiconductor particles in dispersion is preferably 0.01 µm to 100 µm.

Two types or more of fine semiconductor particles having different particle size distributions may be mixed. In this case, it is preferable that smaller particles have an average particle size of 5 nm to 50 nm, while larger particles have an average particle size of 100 nm to 600 nm. The smaller particles have an effect of increasing a surface area for adsorbing a dye, while the larger particles have an effect of improving a light-capturing ratio by scattering incident light. The mixing ratio (mass ratio) is such that the smaller particles are preferably 50% to 99%, more preferably 70% to 95%, and that the larger particles are preferably 50% to 1%, more preferably 30% to 5%.

Preferably usable to produce the fine semiconductor particles are sol-gel methods described in Sumio Sakka, "Science of Sol-Gel Method," issued by Agune Shofusha (1998), and "Thin Film-Coating Technology by Sol-Gel Method" (1995) issued by the Technical Information Association, etc.; and gel-sol methods described in Tadao Sugimoto, "Synthesis of Mono-Dispersion Particles and Control of Their Size and Form by Novel Gel-Sol Method," and MATERIA, Vol. 35, No. 9, pages 1,012 to 1,018 (1996). Also preferable are a sulfuric acid method and a chlorine method described in Manabu Seino, "Properties and Applied Technique of Titanium oxide," Gihodo Shuppan, (1997), and a method developed by Degussa, which comprises preparing oxides by subjecting chlorides to a high-temperature hydrolysis in an oxyhydrogen salt.

In the case of using the fine semiconductor particles of TiO₂, it is particularly preferable to use as the sol-gel method those described in Christophe J. Barb'e, et al, the Journal of American Ceramic Society, Vol. 80, No. 12, pages 3,157 to 3,171 (1997), and Burnside, et al, Chemistry of Materials, Vol. 10, No. 9, pages 2,419 to 2,425.

### (2) Porous layer of fine semiconductor particles

In the formation of a porous layer composed of the above fine semiconductor particles on the conductive support, it is general to utilize a method for coating the conductive support with a dispersion or a colloidal solution containing fine semiconductor particles. A wet-type film production method is relatively advantageous for the mass production of the photoelectric conversion device, improvement of properties of the solution containing fine semiconductor particles, improvement of the adaptability of the conductive support, etc. Typical examples of such wet-type film production methods are a coating method and a printing method.

The dispersion containing fine semiconductor particles may be prepared by using a dispersion or a colloid liquid prepared by the above sol-gel method, etc. without treatment; by crushing the semiconductor in a mortar; or by dispersing the semiconductor while grinding it in a mill.

Usable as dispersion solvents for the fine semiconductor particles may be water or organic solvents such as methanol, ethanol, isopropyl alcohol, dichloromethane, acetone, acetonitrile, ethyl acetate, etc. Polymers such as polyethylene glycol, surfactants, acids, chelating agents, etc. may be used as dispersing agents, if necessary. Polyethylene glycol is preferably added to the dispersion, because changing the molecular weight of the polyethylene glycol makes it possible to control the viscosity of the dispersion, and form a layer of fine semiconductor particles resistant to peeling.

Preferable coating methods include application methods such as a roller method and a dipping method, metering methods such as an air-knife method and a blade method, etc. Further, preferable as methods for applying and metering in the same portion are a wire-bar method disclosed in JP 58-4589 B, a slide-hopper method described in U.S. Patents 2,681,294, 2,761,419 and 2,761,791, an extrusion method, a curtain method, etc. Further preferable as commonly usable methods are a spin-coating method and a spray method. Usable as wet printing methods are three major printing methods by relief printing, offset printing and gravure printing, as well as an intaglio printing method, a gum printing method, a screen printing method, etc. A film production method may be selected from these methods depending on the viscosity of the dispersion and the desired wet thickness.

The viscosity of the dispersion comprising the fine semiconductor particles materially depends on the kind and dispersion property of the fine semiconductor particles, the kind of a solvent, and additives such as a surfactant and a binder. Preferable methods used for high-viscosity dispersions (for example, 0.01 to 500 poise) are an extrusion method, a casting method, a screen-printing method, etc. For low-viscosity dispersions (for instance, 0.1 poise or less), preferable examples of methods for forming uniform films are a slide-hopper method, a wire-bar method and a spin-coating method. An extrusion method may be used for the low-viscosity dispersion if it is coated in a relatively large amount. A film production method may be selected like this depending on the viscosity of the dispersion, the amount of coated dispersion, the material of the support, the coating speed, etc.

The porous layer of fine semiconductor particles is not limited to a single layer. Dispersions comprising the fine semiconductor particles having different particle sizes may be coated to form a multi-layer coating. Alternatively, dispersions containing different fine semiconductor particles, binders or additives may be coated to form a multi-layer coating. The multi-layer coating is effective, when it is impossible to form a layer having a sufficient thickness by one coating step. Suitable for the multi-layer coating are an extrusion method and a slide-hopper method. At the time of forming the multi-layer coating, a plurality of layers may be coated simultaneously or successively from several times to ten-several times. In the latter case, a screen method is also preferably used.

Generally, the thicker the porous layer of fine semiconductor particles (having a thickness equal to that of the photosensitive layer), the higher the light-capturing rate, because a larger amount of the dye is incorporated therein per a unit projected area. In this case, however, there is large loss owing to recombination of electric charges because of increased diffusion distance of the generated electrons. Thus, the preferable thickness of the porous layer of fine semiconductor particles is 0.1 µm to 100 µm. When the photoelectric conversion device of the present invention is used in a solar cell, the thickness of the porous layer of fine semiconductor particles is preferably 1 µm to 30 µm, more preferably 2 µm to 25 µm. The amount of the fine semiconductor particles applied to the conductive support is preferably 0.5 g to 400 g, more preferably 5 g to 100 g, per 1 m² of the substrate.

After applying the fine semiconductor particles to the conductive support, the fine semiconductor particles are preferably subjected to a heat treatment, thereby bringing them into electronic contact with each other, and thus increasing the strength of the resultant coating and the adherence to the support. The heating temperature is preferably 40°C to 700°C, more preferably 100°C to 600°C. The heating time is preferably about 10 minutes to 10 hours. High-temperature treatment is not preferable to a substrate having a low melting or softening point, such as a polymer film substrate, because it tends to deteriorate such a substrate. The heat treatment is preferably carried out at as low a temperature as possible from the viewpoint of cost. Such a low-temperature heat treatment can be made possible by heat treatment in the presence of fine semiconductor particles having a size of 5 nm or smaller, a mineral acid, etc.

After the heat treatment, the layer of fine semiconductor particles may be subjected to chemical metal-plating using an aqueous titanium tetrachloride solution or electrochemical metal-plating using an aqueous titanium trichloride solution, etc., as described in U.S. Patent 5,084,365, to increase the surface area and purity of the fine semiconductor particles, thereby improving the efficiency of injecting electrons into the particles from the dye.

The porous layer of fine semiconductor particles preferably has a large surface area such that it can adsorb a large amount of a dye. The layer of fine semiconductor particles is preferably a porous layer, and the porous layer of fine semiconductor particles has a roughness factor of 10 or more, preferably 100 or more. Though not particularly restrictive, the upper limit of the roughness factor is usually about 1,000. Incidentally, the roughness factor is represented by a ratio of surface area / projected area in the porous layer of fine semiconductor particles formed on the conductive support, etc.

### (B) Cathodic electrodeposition

The cathodic electrodeposition can be carried out, for instance, by methods described in Applied Physics Letter, Vol. 68 (17), pages 2439 to 2440, (1996), etc. Typically, the conductive support is coated with fine semiconductor particles to form a semiconductor electrode (working electrode) with a dye adsorbed thereonto if necessary, and using a three-pole method with a potentiostat, the working electrode is polarized on a cathode side in an electrolytic solution. Though voltage at the working electrode may be set properly depending on a metal used, it is preferably about -2 V to -0.5 V, more preferably -1.5 V to -0.7 V, particularly - 1.1 V to -0.9 V when the reference electrode is a silver / silver chloride electrode. The voltage-applying time is generally 10 seconds to 24 hours, preferably 15 seconds to 1 hour. By this step, a metal oxide or a metal hydroxide is deposited on the working electrode, and drying or heating turns it to a metal oxide layer. Usually, drying or heating may be carried out at 50°C to 450°C for about 30 minutes to 24 hours. A mass ratio of the metal oxide layer to the porous layer of fine semiconductor particles is preferably 0.01 to 10%, more preferably 0.05 to 1%.

The electrolyte used in the cathodic electrodeposition contains an electrolytic salt and a solvent. Preferably usable as the electrolytic salt are metal nitrates, though other electrolytic salts may be used. Metals contained in the metal nitrates are titanium, tin, zinc, magnesium, iron, nickel, tungsten, zirconium, hafnium, strontium, indium, cerium, scandium, yttrium, lanthanum, vanadium, niobium, tantalum, cadmium, lead, antimony, gallium, germanium, etc., preferably titanium, tin, zinc, tungsten, zirconium, hafnium, indium, scandium, yttrium, niobium, gallium and germanium, more preferably zinc and titanium. Preferable as the titanium nitrate is titanium tetranitrate.

The metal nitrate per se may be dissolved in an electrolytic solution. Alternatively, a metal halide or a metal alkoxide may be added to an acidic aqueous solution with nitric acid (usually 0.001-10 N, preferably 0.01-1 N) to form a metal nitrate by hydrolysis, and the resultant solution may be used as an electrolytic solution. The concentration of the metal nitrate in the electrolytic solution is preferably 0.001 to 5 mol/L, more preferably 0.01 to 1 mol/L.

Other electrolytic salts than the metal nitrates may be used. In this case, the electrolytic salts have preferably cations such as alkali metal ions (Li⁺, Na⁺, K⁺, Rb⁺, Cs⁺, etc.), particularly K⁺. The electrolyte salt preferably comprises a conjugated anion of a strong acid. Examples of the conjugated anions of strong acids include halide ions such as F⁻, Cl⁻, Br⁻, I⁻; sulfate ion; nitrate ion; phosphate ion; ClO₄⁻; BF₄⁻; PF₆⁻; SbF₆⁻; AsF₆⁻; trifluoroacetate ion; methane sulfonate ion, p-toluensulfonate ion, trifluoromethane sulfonate ion, bis(trifluoroethanesulfonyl) imide ion, tris(trifluoromethanesulfonyl) methide ion, etc. Nitrate ion is particularly preferable among them.

The electrolyte salts may be used alone or in combination. In the electrolytic solution, the concentration of an electrolyte salt used for cathodic electrodeposition is preferably 0.001 to 5 mol/L more preferably 0.01 to 1 mol/L.

Though a solvent used for the electrolytic solution for cathodic electrodeposition is not particularly limited as long as it dissolves electrolyte salts, it is generally water or an organic solvent, preferably water. The organic solvent is preferably non-aqueous. Examples of the organic solvents include alcohols such as methanol, ethanol, t-butanol and benzyl alcohol; nitriles such as acetonitrile, propionitrile and 3-methoxypropionitrile; nitromethane; halogenated hydrocarbons such as dichloromethane, dichloroethane, chloroform and chlorobenzene; ethers such as dimethoxyethane, tetrahydrofuran; dimethylsulfoxide; amides such as *N,N*-dimethylformamide and *N,N*-dimethylacetamide; *N*-methylpyrrolidone; 1,3-dimethylimidazolidinone; 3-methyloxazolidinone; esters such as ethyl acetate and butyl acetate; carbonates such as diethyl carbonate, ethylene carbonate and propylene carbonate; ketones such as acetone, 2-butanone and cyclohexanone; mixture thereof; etc.

The working electrode is preferably washed after the cathodic electrodeposition. The solvent used for washing is preferably the same as that used for the above electrolytic solution.

A dye may be dissolved in an electrolytic solution for cathodic electrodeposition in advance. This is particularly preferable when a zinc oxide layer is formed on the layer of fine semiconductor particles. The concentration of the dye in the electrolytic solution is preferably 0.0001 to 5 mol/L, more preferably 0.001 to 0.1 mol/L. Though the dye is not particularly limited as long as it is dissolved in the electrolytic solution, a ruthenium complex dye is preferable.

### [2] Photoelectric conversion device

The photoelectric conversion device of the present invention is generally obtained by carrying out dye adsorption onto the fine semiconductor particles and the formation of a metal oxide layer by cathodic electrodeposition in this order or in an opposite order after coating of the fine semiconductor particles onto the conductive support and burning. When dye adsorption is carried out before the cathodic electrodeposition, dye adsorption may be conducted again after the cathodic electrodeposition. With a metal oxide layer formed by the cathodic electrodeposition, the photoelectric conversion device has high conversion efficiency.

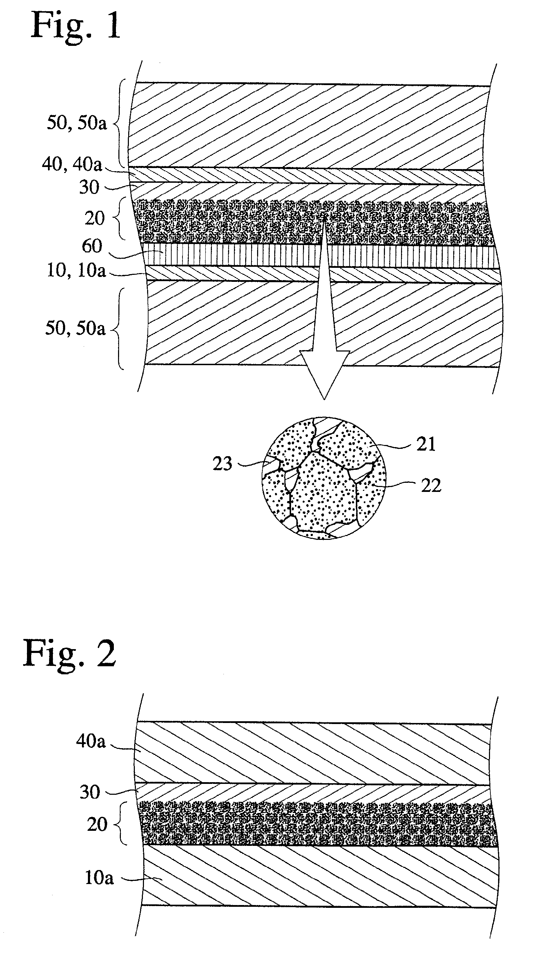

As shown in Fig. 1, the photoelectric conversion device of the present invention preferably has a laminate structure comprising an electrically conductive layer 10, a photosensitive layer 20 comprising fine semiconductor particles 21 sensitized by a dye 22 and an charge-transporting material 23 penetrating into voids among the fine semiconductor particles 21, a charge transfer layer 30, and a counter electrode layer 40 in this order. The charge-transporting material 23 in the photosensitive layer 20 may be generally the same as the charge transfer material used in the charge transfer layer 30. The fine semiconductor particles 21 of the photosensitive layer 20 are coated with the above metal oxide layer (not shown). An undercoating layer 60 may be disposed between the electrically conductive layer 10 and the photosensitive layer 20. The electrically conductive layer 10 and/or the counter electrode layer 40 may be supported by a substrate 50 to improve the strength of the photoelectric conversion device. A layer composed of the electrically conductive layer 10 and the substrate 50 optionally used for supporting it is referred to as "conductive support," and a layer composed of the counter electrode layer 40 and the substrate 50 optionally used for supporting it is referred to as "counter electrode" hereinafter. The electrically conductive layer 10, the counter electrode layer 40 and the substrate 50 shown in Fig. 1 may be a transparent, electrically conductive layer 10a, a transparent counter electrode layer 40a and a transparent substrate 50a, respectively.

A photoelectric cell is constituted by connecting the photoelectric conversion device to an external circuit to electrically work or generate electricity in the external circuit. A photo sensor is such a photoelectric conversion device for sensing optical information. Such a photoelectric cell that has a charge transfer material mainly composed of an ion-conductive material is referred to as a photo-electrochemical cell. A photoelectric cell intended for power generation with solar light is referred to as a solar cell.

In the photoelectric conversion device of the present invention shown in Fig. 1, a light introduced into the photosensitive layer 20 containing fine semiconductor particles 21 sensitized by the dye 22 excites the dye 22, etc., to generate excited high-energy electrons, which are transported to a conduction band of the fine semiconductor particles 21, and are diffused to reach the electrically conductive layer 10. At this time, the dye 22 is in an oxidized form. In a photoelectric cell, electrons in the electrically conductive layer 10 return to the oxidized dye through the counter electrode layer 40 and the charge transfer layer 30 while doing job in an outside circuit, so that the dye 22 is regenerated. The photosensitive layer 20 acts as a negative electrode, while the counter electrode layer 40 acts as a positive electrode. In boundaries between adjacent layers, for instance, between the electrically conductive layer 10 and the photosensitive layer 20, between the photosensitive layer 20 and the charge transfer layer 30, and between the charge transfer layer 30 and the counter electrode layer 40, respectively, components of each layer may be diffused and mixed. Each of the layers will be explained in detail below.

### (A) Conductive support

The conductive support is: (1) a single layer of an electrically conductive layer, or (2) two layers of an electrically conductive layer and a substrate. In the case (1), the electrically conductive layer is preferably made of an electrically conductive material having such a strength that it can fully seal the photoelectric conversion device, for example, a metal such as platinum, gold, silver, copper, zinc, titanium, aluminum and an alloy thereof. In the case (2), a substrate having an electrically conductive layer containing an electrically conductive material formed on the photosensitive layer side may be used as a conductive support. Preferable examples of the electrically conductive materials include metals such as platinum, gold, silver, copper, aluminum, rhodium and indium; carbon; electrically conductive metal oxides such as indium-tin composite oxides and tin oxides doped with fluorine; etc. The electrically conductive layer preferably has a thickness of about 0.02 to 10 µm.

The surface resistance of the conductive support is desirably as low as possible. The surface resistance of the conductive support is preferably 100 Ω/square or less, more preferably 40 Ω/square or less. The lower limit of the surface resistance is generally about 0.1 Ω/square, though it is not particularly limited.

When light is irradiated from the conductive support side, it is preferred that the conductive support is substantially transparent. The term "substantially transparent" used herein means that 10% or more of light transmittance is obtained. The light transmittance of the conductive support is preferably 50% or more, particularly 70% or more.

The transparent conductive support is preferably provided by forming the electrically conductive, transparent layer comprising an electrically conductive metal oxide on the transparent substrate of such material as glass and a plastic by coating or vapor deposition. The electrically conductive, transparent layer is preferably made of tin dioxide doped with fluorine. The transparent substrate may be made of glass such as a low-cost soda glass excellent in strength. In addition, a transparent polymer film may be used as the transparent substrate to obtain a low-cost, flexible photoelectric conversion device. Materials usable for the transparent polymer film are triacetylcellulose (TAC), polyethylene terephthalate (PET), polyethylene naphthalate (PEN), syndiotactic polystyrene (SPS), polyphenylenesulfide (PPS), polycarbonate (PC), polyarylate (PAr), polysulfone (PSF), polyestersulfone (PES), polyetherimide (PEI), cyclic polyolefins, brominated phenoxy resins, etc. To secure sufficient transparency, the amount of the electrically conductive metal oxide coated is preferably 0.01 to 100 g per 1 m² of the glass or plastic substrate.

A metal lead may be used as a current collector to reduce the resistance of the transparent conductive support. The metal lead is preferably made of a metal such as platinum, gold, nickel, titanium, aluminum, copper, silver, etc., particularly made of aluminum or copper. The metal lead is preferably formed on the transparent substrate by a vapor deposition method, a sputtering method, etc., preferably with a electrically conductive, transparent layer comprising conductive tin oxide or ITO formed thereon. It is also preferable that after the electrically conductive, transparent layer is formed on the transparent substrate, the metal lead is formed on the electrically conductive, transparent layer. Decrease in the quantity of incident light by the metal lead is suppressed to preferably 10% or less, more preferably 1 to 5%.

### (B) Photosensitive layer

In the photosensitive layer, the fine semiconductor particles act as a photosensitive substance to absorb light and conduct charge separation, thereby generating electrons and holes. In the dye-sensitized, fine semiconductor particles, the light absorption and the generation of electrons and holes are primarily caused by the dye, and the fine semiconductor particles receive and convey electrons or holes. The semiconductor used in the present invention is preferably an *n*-type semiconductor, in which conductor electrons act as a carrier under a photo-excitation condition to generate anode current. The preferred states, forming methods, etc. of semiconductors and porous layers of fine semiconductor particles for photosensitive layers may be the same as those described in the column of "[1] Production of film of fine semiconductor particles."

### (1) Treatment

In the present invention, the fine semiconductor particles used for the photosensitive layer may be treated with a metal compound solution. Examples of the metal compounds include alkoxides, halides, etc. of metals selected from the group consisting of scandium, yttrium, lanthanoids, zirconium, hafnium, niobium, tantalum, gallium, indium, germanium and tin. A solution of the metal compound is usually an aqueous solution or an alcohol solution. The term "treatment" used herein means an operation for bringing the above fine semiconductor particles into contact with the above solution before the fine semiconductor particles adsorb a dye. After the contact, the above metal compound may or may not be adsorbed onto the fine semiconductor particles. The treatment is preferably carried out after the above layer of fine semiconductor particles is formed.

The preferred treatment method may be a method in which fine semiconductor particles are immersed in a metal compound solution (immersion method). In addition, a method of spraying a metal compound solution for a predetermined time (spraying method) is also usable. The temperature of the metal compound solution in carrying out the immersion method (immersion temperature) is typically -10 to +70°C, preferably 0°C to 40°C. The treatment time is also not particularly restrictive but may be typically 1 minute to 24 hours, preferably 30 minutes to 15 hours. After the immersion, the fine semiconductor particles may be washed with distilled water. Also, to strengthen the bonding of substances attached to the fine semiconductor particles by the immersion treatment, burning may be carried out. The burning conditions may be set similarly to the above-described heat treatment conditions.

### (2) Sensitization by dye

Any compounds capable of absorbing visible and near infrared rays to sensitize the semiconductor may be used as the dye for the photosensitive layer. Preferable examples of such dyes include metal complex dyes, methine dyes, porphyrin dyes and phthalocyanine dyes. Among them, the metal complex dyes are preferable, and ruthenium complex dyes are particularly preferable. Usable as the dye for the photosensitive layer are phthalocyanine, naphthalocyanine, metallophthalocyanines, metallonaphthalocyanines, porphyrins such as tetraphenylporphyrin and tetrazaporphyrin, metalloporphyrins, derivatives thereof, etc. Dyes for dye lasers are also usable in the present invention. To make the photoelectric conversion wave range as wide as possible and to increase the photoelectric conversion efficiency, two or more kinds of the dyes may preferably be combined. In the case of using two or more kinds of the dyes, the kinds and the ratio of the dyes may be selected in accordance with the wave range and the strength distribution of the light source.

The dye preferably has an appropriate interlocking group capable of being adsorbed onto the surfaces of the fine semiconductor particles. Preferable interlocking groups include acidic groups such as -COOH, -OH, - SO₂H, -PO(OH)₂ and -OPO(OH)₂ and π-conductive chelating groups such as oxime, dioxime, hydroxyquinoline, salicylate and α-ketoenolate. Particularly preferable among them are -COOH, -PO(OH)₂ and -OPO(OH)₂. The interlocking group may form a salt with an alkali metal, etc. or an intramolecular salt. If the polymethine dye has an acidic group such that its methine chain forms a squarylium or croconium ring, such an acidic group may be called the interlocking group. The preferable sensitizing dyes used for the photosensitive layer are specifically described below.

### (a) Metal complex dye

The metal complex dye used in the present invention comprises a metal atom, which is preferably ruthenium (Ru). The ruthenium complex dyes described in U.S. Patents 4,927,721, 4,684,537, 5,084,365, 5,350,644, 5,463,057 and 5,525,440, JP 7-249790 A, JP 10-504512 A and JP 2000-26487A, WO 98/50393, etc. may be used in the present invention. The specific examples of the preferred metal complex dyes are described in JP 2001-320068 A, paragraphs 0051 to 0057. The most typical examples of the metal complex dyes are represented by the following formulae D-1 and D-2.

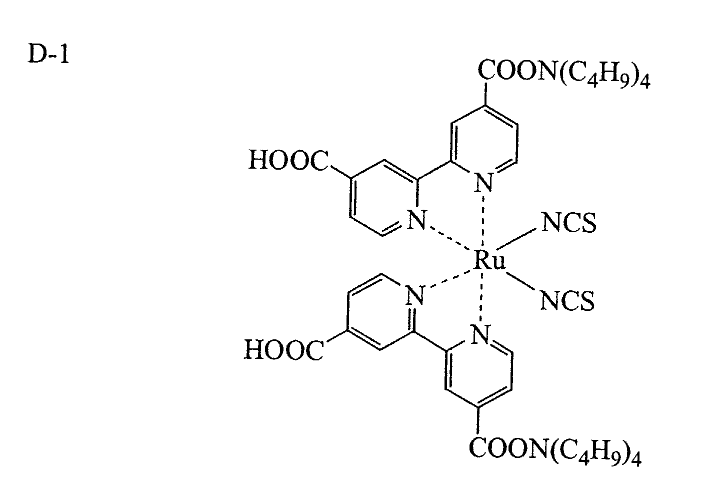

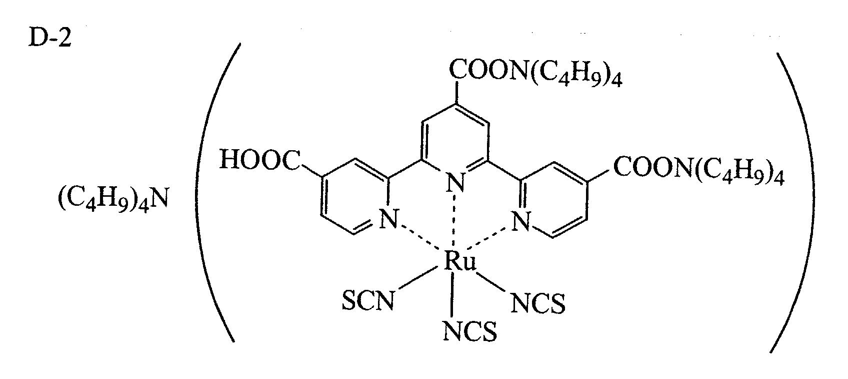

### (b) Methine dye

The methine dyes used in the present invention are preferably polymethine dyes such as cyanine dyes, merocyanine dyes or squarylium dyes. Examples of the polymethine dyes are described in JP 11-35836 A, JP 11-158395 A, JP 11-163378 A, JP 11-214730 A, JP 11-214731 A, European Patents 892411 and 911841. The method for synthesizing the polymethine dyes are described in F. M. Hamer, "Heterocyclic Compounds - Cyanine Dyes and Related Compounds" issued in 1964 by John Wiley & Sons, New York, London; D. M. Sturmer, "Heterocyclic Compounds - Special topics in Heterocyclic Chemistry," Chapter 18, Section 14, pages 482 to 515 issued in 1977 by John Wiley & Sons, New York, London; Rodd's Chemistry of Carbon Compounds, 2nd. Edition, Vol. IV, Part B, Chapter 15, pages 369 to 422 issued in 1977 by Elsevier Science Publishing Company Inc., New York; GB Patent 1,077,611, Ukrainskii Khimicheskii Zhurnal, Vol. 40, No. 3, pages 253 to 258; and Dyes and Pigments, Vol. 21, pages 227 to 234.

### (3) Adsorption of dye onto fine semiconductor particle film

The dye may be adsorbed onto the fine semiconductor particle film by soaking the conductive support having the well-dried film of fine semiconductor particles in a dye solution, or by coating the film of fine semiconductor particles with the dye solution. In the former case, a soaking method, a dipping method, a roller method, an air-knife method, etc. may be used. In the soaking method, dye adsorption may be carried out at a room temperature or under reflux while heating as described in JP 7-249790 A. In the latter method, a wire-bar method, a slide-hopper method, an extrusion method, a curtain method, a spin-coating method, a spraying method, etc. may be used. Also, a dye may be applied in the form of image to the substrate by an inkjet printing method, etc., and this image per se may be used as a photoelectric conversion device.

Preferable examples of solvents for dissolving the dye preferably include alcohols such as methanol, ethanol, *t*-butanol and benzyl alcohol; nitriles such as acetonitrile, propionitrile and 3-methoxypropionitrile; nitromethane; halogenated hydrocarbons such as dichloromethane, dichloroethane, chloroform and chlorobenzene; ethers such as diethylether and tetrahydrofuran; dimethylsulfoxide; amides such as *N,N*-dimethylformamide and N,N-dimethylacetamide; N-methylpyrrolidone; 1,3-dimethylimidazolidinone; 3-methyloxazolidinone; esters such as ethyl acetate and butyl acetate; carbonates such as diethyl carbonate, ethylene carbonate and propylene carbonate; ketones such as acetone, 2-butanone and cyclohexanone; hydrocarbons such as hexane, petroleum ether, benzene and toluene; and mixtures thereof.

The amount of the dye adsorbed is preferably 0.01 to 100 mmol per a unit surface area (1 m²) of the layer of fine semiconductor particles. The amount of the dye adsorbed onto the fine semiconductor particles is preferably 0.01 to 1 mmol per 1 g of the fine semiconductor particles. With this adsorption amount of the dye, the semiconductor can be sufficiently sensitized. Too small an amount of the dye results in insufficient sensitization. On the other hand, if the amount of the dye is excessive, the dye not adsorbed onto the fine semiconductor particles is free, thereby reducing the sensitization of the fine semiconductor particles. To increase the amount of the dye adsorbed, it is preferable that the layer of fine semiconductor particles is subjected to a heat treatment before the dye adsorption. After the heat treatment, it is preferable for the film of fine semiconductor particles to quickly adsorb the dye while it is still at 60 to 150°C without returning to room temperature, to prevent water from being adsorbed onto the surfaces of fine semiconductor particles.

To weaken interaction such as association between the dyes, a colorless compound having a function as a surfactant may be added to a dye adsorption solution, so that it is adsorbed onto the fine semiconductor particles together with the dye. Examples of the colorless compounds include steroid compounds having such groups as a carboxyl group and a sulfonic acid group, for example, cholic acid, deoxycholic acid, chenodeoxycholic acid, taurodeoxycholic acid, etc., and sulfonates shown below.

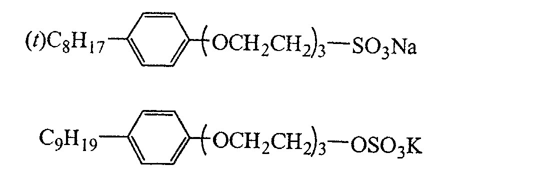

The dye not adsorbed onto the layer of fine semiconductor particles is preferably removed by washing immediately after the dye adsorption process. The washing is preferably carried out in a wet-type washing bath with an organic solvent such as acetonitrile and an alcohol solvent.

The surfaces of the fine semiconductor particles may be treated with amines, quaternary ammonium salts, ureide compounds comprising at least one ureide group, silyl compounds comprising at least one silyl group, alkali metal salts or an alkaline earth metal salts after the dye adsorption. The amines are preferably pyridine, 4-1-butylpyridine, polyvinylpyridine, etc., and the quaternary ammonium salts are preferably tetrabutylammonium iodide, tetrahexylammonium iodide, etc. The amines or the quaternary ammonium salts may be used alone if they are liquid, or may be dissolved in organic solvents.

### (C) Charge transfer layer

The charge transfer layer comprises a charge transfer material having a function of supplying electrons to the oxidized dye. The charge transfer material used in the present invention may be (i) an ion-conductive, charge transfer material or (ii) a charge transfer material in a solid state through which carriers can be transported. Examples of the ion-conductive, charge transfer materials (i) include molten electrolytic salt compositions containing redox couples; electrolytic solutions having redox couples dissolved in solvents; so-called electrolytic gel compositions having polymer matrices impregnated with solutions containing redox couples; solid electrolytic compositions; etc. Examples of the carrier-transporting charge transfer materials (ii) include electron-transporting materials and hole-transporting materials. These charge transfer materials may be used in combination. The charge transfer layer used in the present invention is preferably composed of the molten electrolytic salt composition or the electrolytic gel composition.

### (1) Molten electrolytic salt composition

The molten electrolytic salt composition comprises a molten salt. The molten electrolytic salt composition is preferably in a liquid state at room temperature. The molten salt, which is a main component, is in a liquid state at room temperature or has a low melting point. Examples of the molten electrolytic salts include pyridinium salts, imidazolium salts and triazolium salts disclosed in WO 95/18456, JP 8-259543 A, "Denki Kagaku (Electrochemistry)," 65, 11, 923 (1997). The melting point of the molten electrolytic salt is preferably 50°C or lower, more preferably 25°C or lower. Specific examples of the molten salts are described in detail in JP 2001-320068 A, paragraphs 0066 to 0082.

The molten salt electrolytes may be used alone or in combination. The molten salt electrolytes may also be used in combination with alkali metal salts such as LiI, NaI and KI, LiBF₄, CF₃COOLi, CF₃COONa, LiSCN, NaSCN, etc. The amount of the alkali metal salt added is preferably 2% by mass or less, more preferably 1% by mass or less, based on the entire electrolytic composition. 50% or more by mol of an anion contained in the molten salt electrolyte composition is preferably an iodide ion.

The molten electrolytic salt composition usually contains iodine. The iodine content is preferably 0.1 to 20% by mass, more preferably 0.5 to 5% by mass, based on the entire molten electrolytic salt composition.

The molten salt electrolyte composition preferably has low volatility and does not contain a solvent. In a case where a solvent is added, the amount of the solvent added is preferably 30% by mass or less based on the total amount of the molten salt electrolyte composition. The molten salt electrolyte composition may be used in a gel form as described below.

### (2) Electrolytic solution

The electrolytic solution used in the present invention is preferably composed of an electrolyte, a solvent and an additive. Examples of the electrolytes used in the electrolytic solution include a combination of I₂ and an iodide (a metal iodide such as LiI, NaI, KI, CsI and CaI₂, a quaternary ammonium iodide such as tetralkylammonium iodide, pyridinium iodide and imidazolium iodide, etc.) ; a combination of Br₂ and a bromide (a metal bromide such as LiBr, NaBr, KBr, CsBr and CaBr₂, a quaternary ammonium bromide such as tetralkylammonium bromide and pyridinium bromide, etc.) ; a metal complex such as a ferrocyanide-ferricyanide and a ferrocene-ferricinium ion; a sulfur compound such as sodium polysulfide and alkylthiol-alkyldisulfide; a viologen dye; hydroquinone-quinone; etc. Preferable among them is a combination of I₂ and LiI or the quaternary ammonium iodide such as pyridinium iodide and imidazolium iodide. These electrolytes may be used in combination.

The concentration of the electrolyte in the electrolytic solution is preferably 0.1 to 10 M, more preferably 0.2 to 4 M. The concentration of iodine added to the electrolytic solution is preferably 0.01 to 0.5 M, based on the electrolytic solution.

The solvents used for the electrolytic solution are preferably those having a low viscosity and a high ionic mobility, or those having a high permittivity and capable of increasing the actual carrier concentration of the electrolytic solution, to exhibit an excellent ionic conductibility. Examples of such solvents include carbonates such as ethylene carbonate and propylene carbonate; heterocyclic compounds such as 3-methyl-2-oxazolidinone; ethers such as dioxan and diethyl ether; chain ethers such as ethylene glycol dialkylethers, propylene glycol dialkylethers, polyethylene glycol dialkylethers and polypropylene glycol dialkylethers; alcohols such as methanol, ethanol, ethylene glycol monoalkylethers, propylene glycol monoalkylethers, polyethylene glycol monoalkylethers and polypropylene glycol monoalkylethers; polyvalent alcohols such as ethylene glycol, propylene glycol, polyethylene glycol, polypropylene glycol and glycerin; nitrile compounds such as acetonitrile, glutarodinitrile, methoxyacetonitrile, propionitrile and benzonitrile; aprotic polar solvents such as dimethylsulfoxide (DMSO) and sulfolane; water; etc. These solvents may be used in combination.

The molten electrolytic salt composition or the electrolytic solution described above preferably comprises a basic compound such as *t*-butylpyridine, 2-picoline, 2,6-lutidine, etc. as described in J. Am. Ceram. Soc., 80 (12), 3157-3171 (1997). When the basic compound is added to the electrolytic solution, the concentration of the basic compound is preferably 0.05 to 2 M based on the electrolytic solution. When the basic compound is added to the molten electrolytic salt composition, the basic compound preferably comprises an ionizable group. The amount of the basic compound is preferably 1 to 40% by mass, more preferably 5 to 30% by mass, based on the entire molten electrolytic salt composition.

### (3) Electrolytic gel composition

In the present invention, the molten electrolytic salt composition or the electrolytic solution described above may be gelled by adding a polymer or oil-gelling agent, by the polymerization of a multifunctional monomer, by the cross-linking reaction of a polymer, etc.

In the case of adding a polymer to cause the gelation of the molten electrolytic salt composition or the electrolytic solution, usable polymers may be those described in "Polymer Electrolyte Reviews 1 and 2," edited by J. R. MacCallum and C. A. Vincent, ELSEIVER APPLIED SCIENCE. The preferable polymers are polyacrylonitrile and polyvinylidene fluoride.

In the case of adding an oil-gelling agent to cause the gelation of the molten electrolytic salt composition or the electrolytic solution, usable oil-gelling agents may be those described in J. Chem. Soc. Japan, Ind. Chem. Soc., 46, 779 (1943); J. Am. Chem. Soc., 111,5542 (1989); J. Chem. Soc., Chem. Commun., 390 (1993); Angew. Chem. Int. Ed. Engl., 35, 1949 (1996); Chem. Lett., 885 (1996); and J. Chem. Soc., Chem. Commun., 545 (1997). The preferred oil-gelling agents have an amide structure.

An example of the gelation of the electrolytic solution is described in JP 11-185863 A, and an example of the gelation of the molten electrolytic salt composition is described in JP 2000-58140 A. These are also usable for the present invention.

In the case of the cross-linking reaction of a polymer to cause the gelation of the molten electrolytic salt composition or the electrolytic solution, it is preferable to use a polymer having a cross-linkable group together with a cross-linking agent. The cross-linkable groups are preferably amino groups or nitrogen-containing heterocyclic groups, such as a pyridyl group, an imidazolyl group, a thiazolyl group, an oxazolyl group, a triazolyl group, a morpholyl group, a piperidyl group, a piperazyl group, etc. The cross-linking agent is preferably an electrophilic reagent having a plurality of functional groups that may be subjected to electrophilic reaction with a nitrogen atom, for example, alkyl halides, aralkyl halides, sulfonates, acid anhydrides, acid chlorides, isocyanates, α, β-unsaturated sulfonyl compounds, α,β-unsaturated carbonyl compounds, α,β-unsaturated nitrile compounds, etc. The cross-linking methods disclosed in JP 2000-17076 A and JP 2000-86724 A may be used in the present invention.

### (4) Hole-transporting material

In the present invention, organic, solid, hole-transporting materials, inorganic, solid, hole-transporting materials or a combination thereof may be used for the charge transfer layer instead of the ion-conductive, electrolytic composition such as the molten electrolytic salt composition.

### (a) Organic, hole-transporting materials

Preferable examples of the organic, hole-transporting materials used in the present invention include aromatic amines disclosed in J. Hagen, et al., Synthetic Metal, 89, 215 to 220 (1997), Nature, Vol. 395, October 8, 1998, pages 583 to 585, WO 97/10617, U.S. Patents 4,923,774 and 4,764,625, JP 59-194393 A, JP 5-234681 A, JP 4-308688 A, JP 3-269084 A, JP 4-129271 A, JP 4-175395 A, JP 4-264189 A, JP 4-290851 A, JP 4-364153 A, JP 5-25473 A, JP 5-239455 A, JP 5-320634 A, JP 6-1972 A, JP 7-138562 A, JP 7-252474 A and JP 11-144773 A, etc.; triphenylenes disclosed in JP 11-149821 A, JP 11-148067 A, JP 11-176489 A, etc.; oligothiophene compounds disclosed in Adv. Mater., 9, No. 7, page 557 (1997), Angew. Chem. Int. Ed. Engl., 34, No. 3, pages 303 to 307 (1995), JACS, Vol. 120, No. 4, pages 664 to 672 (1998), etc.; and conductive polymers such as polypyrrole disclosed in K. Murakoshi, et al., Chem. Lett. page 471 (1997) and polyacetylene, poly(p-phenylene), poly(*p*-phenylenevinylene), polythienylenevinylene, polythiophene, polyaniline, polytoluidine and derivatives thereof disclosed in Handbook of Organic Conductive Molecules and Polymers, Vols. 1 to 4, edited by H. S. Nalwa, issued by Wiley.

Nature, Vol. 395, October 8, pages 583 to 585 (1998) describes that added to the organic, hole-transporting material may be a compound having cation radical such as tris(4-bromophenyl) aminium hexachloroantimonate to control the dopant level, or a salt such as Li[(CF₃SO₂)₂N] to control the potential of the semiconductor surface, thereby compensating a space-charge layer.

### (b) Inorganic, hole-transporting material

The inorganic, hole-transporting material may be a*p*-type inorganic compound semiconductor. Band gap of the *p*-type inorganic compound semiconductor is preferably 2 eV or more, more preferably 2.5 eV or more. Ionization potential of the *p*-type inorganic compound semiconductor should be smaller than that of the photosensitive layer to reduce holes of the dye. Although the ionization potential of the *p*-type inorganic compound semiconductor may be selected depending on the kind of the dye, generally, it is preferably 4.5 to 5.5 eV, more preferably 4.7 to 5.3 eV. The *p*-type inorganic compound semiconductor is preferably a compound having a monovalent copper such as CuI, CuSCN, CuInSe₂, Cu(In,Ga)Se₂, CuGaSe₂, Cu₂O, CuS, CuGaS₂, CuInS₂, CuAlSe₂, etc. Preferable among them are CuI and CuSCN. Particularly preferable among them is CuI. Examples of other p-type inorganic compound semiconductors include GaP, NiO, CoO, FeO, Bi₂O₃, MoO₂, Cr₂O₃, etc.

### (5) Formation of charge transfer layer

The charge transfer layer may be formed by any of the following two methods. One method is to attach a counter electrode to a photosensitive layer beforehand and cause a charge transfer material in a liquid state to penetrate into a gap therebetween. Another method is to directly form a charge transfer layer on a photosensitive layer, and then form a counter electrode thereon.

In the former method, the charge transfer material may be caused to penetrate into the gap by a normal pressure process utilizing capillarity, or by a reduced pressure process where the material is sucked into the gap to replace a gas phase therein with a liquid phase.

In the case of forming a wet charge transfer material by the latter method, the counter electrode is disposed on the wet charge transfer material without drying it, and edges thereof are treated to prevent liquid leakage, if necessary. In the case of using a gel electrolyte composition, it may be applied in a liquid state and solidified by polymerization, etc. Solidification may be carried out before or after attaching the counter electrode. The formation of the charge transfer layer composed of the electrolytic solution, the wet organic, hole-transporting material, the electrolytic gel composition, etc. may be carried out in the same manner as in the formation of the fine semiconductor particle layer as described above.

In the case of using a solid, electrolytic composition and a solid, hole-transporting material, the charge transfer layer may be formed by a dry film-forming method such as a vacuum deposition method and a CVD method, followed by attaching a counter electrode thereto. The organic, hole-transporting material may be introduced into the electrode by a vacuum deposition method, a casting method, a coating method, a spin-coating method, a soaking method, an electrolytic polymerization method, a photo-polymerization method, etc. The inorganic, hole-transporting material may be introduced into the electrode by a casting method, a coating method, a spin-coating method, a soaking method, an electrolytic deposition method, an electroless plating method, etc.

### (D) Counter electrode

Like the above conductive support, the counter electrode may be an electrically conductive layer alone or a laminate of the electrically conductive layer and the substrate. Examples of electrically conductive materials used for the counter electrode layer include metals such as platinum, gold, silver, copper, aluminum, magnesium and indium; carbon; and electrically conductive metal oxides such as an indium-tin composite oxide and a fluorine-doped tin oxide. Preferable among them are platinum, gold, silver, copper, aluminum and magnesium. The substrate for the counter electrode is preferably a glass or plastic plate, to which the above electrically conductive material is applied by coating or vapor deposition. The counter electrode layer preferably has a thickness of 3 nm to 10 µm, although the thickness is not particularly limited. The surface resistance of the counter electrode layer is desirably as low as possible. The surface resistance is preferably 50 Ω/square or less, more preferably 20 Ω/square or less.

Because light may be irradiated from either one or both sides of the conductive support and the counter electrode, at least one of them should be substantially transparent so that light can reach the photosensitive layer. To improve the efficiency of power generation, it is preferable that the conductive support is substantially transparent to permit light to pass therethrough. In this case, the counter electrode is preferably reflective to light. Such a counter electrode may be a glass or plastic plate vapor-deposited with a metal or an electrically conductive oxide, or a thin metal film.

The counter electrode may be formed by coating, plating or vapor deposition (PVD, CVD, etc.) of the electrically conductive material directly onto the charge transfer layer, or by attaching the electrically conductive layer formed on the substrate to the charge transfer layer. Like in the conductive support, it is preferable to use a metal lead to reduce the resistance of the counter electrode, particularly when the counter electrode is transparent. Preferable materials and formation methods of the metal lead are the same as in the conductive support.

### (E) Other layers

A thin, dense semiconductor film is preferably formed in advance as an undercoating layer between the conductive support and the photosensitive layer, to prevent short-circuiting between the counter electrode and the conductive support. The prevention of short-circuiting by this undercoating layer is effective particularly in the case of the charge transfer layer comprising the electron-transporting material or the hole-transporting material. The undercoating layer is made of preferably TiO₂, SnO₂, Fe₂O₃, WO₃, ZnO or Nb₂O₅, more preferably TiO₂. The undercoating layer may be formed by a spray-pyrolysis method described in Electrochim. Acta, 40, 643-652 (1995), a sputtering method, etc. The thickness of the undercoating layer is preferably 5 to 1000 nm, more preferably 10 to 500 nm.

Functional layers such as a protective layer and a reflection-preventing layer may be formed on either one or both outer surfaces of the conductive support and the counter electrode, between the electrically conductive layer and the substrate, or in the substrate. The functional layers may be formed by a coating method, a vapor deposition method, an attaching method, etc. depending on their materials.

### (F) Interior structure of photoelectric conversion device

As described above, the photoelectric conversion device may have various interior structures depending on its use. It is classified into two major structures, one allowing light incidence from both faces, and another allowing it from only one side. Fig. 1 described above and Figs. 2 to 9 illustrate the preferable interior structures of the photoelectric conversion device, to which the present invention is applicable.

In the structure illustrated in Fig. 2, a photosensitive layer 20 and a charge transfer layer 30 are formed between an electrically conductive, transparent layer 10a and a transparent counter electrode layer 40a. This structure allows light incidence from both sides of the device.

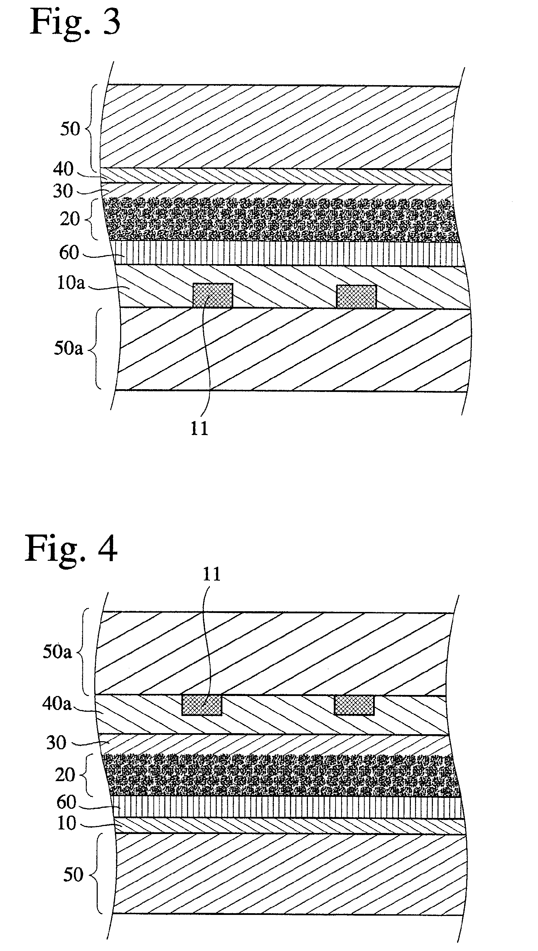

In the structure illustrated in Fig. 3, a transparent substrate 50a partially having a metal lead 11 is provided with an electrically conductive, transparent layer 10a, an undercoating layer 60, a photosensitive layer 20, a charge transfer layer 30 and a counter electrode layer 40 in this order, and further provided with a substrate 50 thereon. This structure allows light incidence from the side of the electrically conductive layer.

In the structure illustrated in Fig. 4, a substrate 50 having an electrically conductive layer 10 is provided with a photosensitive layer 20 via an undercoating layer 60, and then provided with a charge transfer layer 30 and a transparent counter electrode layer 40a thereon, and further provided with a transparent substrate 50a locally having a metal lead 11 inside. This structure allows light incidence from the side of the counter electrode.

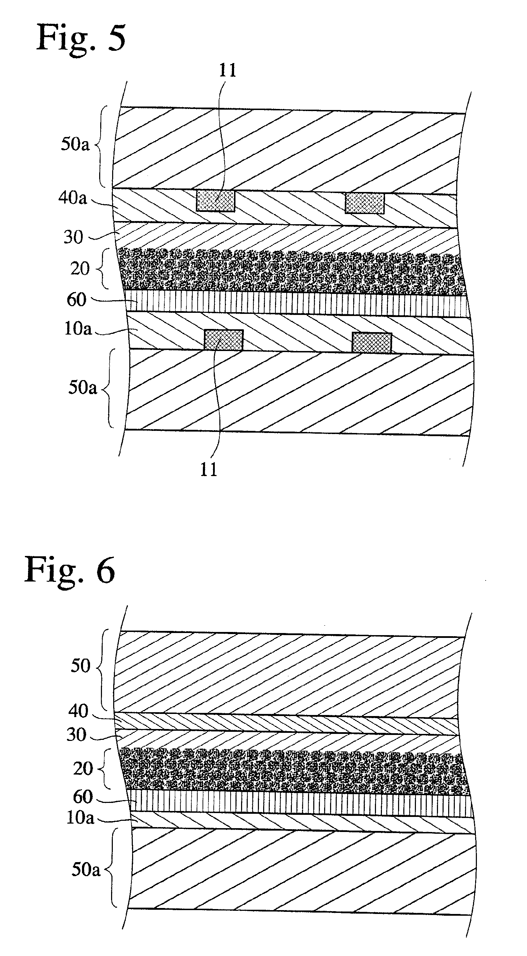

In the structure illustrated in Fig. 5, two transparent substrates 50a each partially having a metal lead 11 are provided with an electrically conductive transparent layer 10a, 40a, and then provided with an undercoating layer 60, a photosensitive layer 20 and a charge transfer layer 30 between the conductive layers. This structure allows light incidence from both sides of the photoelectric conversion device.

In the structure illustrated in Fig. 6, a transparent substrate 50a is provided with an electrically conductive transparent layer 10a, an undercoating layer 60, a photosensitive layer 20, a charge transfer layer 30 and a counter electrode layer 40 in this order, and then attached to a substrate 50. This structure allows light incidence from the side of the electrically conductive layer.

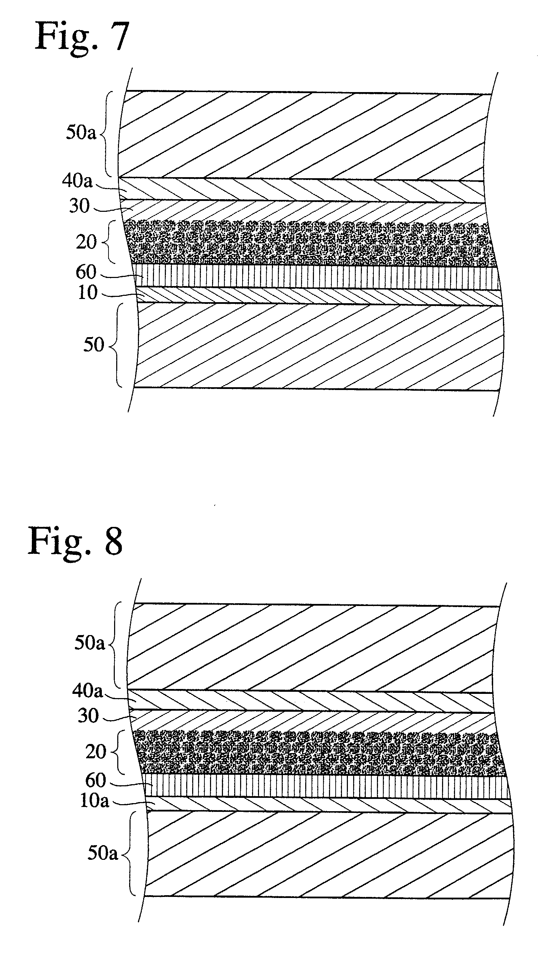

In the structure illustrated in Fig. 7, a substrate 50 is provided with an electrically conductive layer 10, an undercoating layer 60, a photosensitive layer 20, a charge transfer layer 30 and a transparent counter electrode layer 40a in this order, and then attached to a transparent substrate 50a. This structure allows light incidence from the side of the counter electrode.

In the structure illustrated in Fig. 8, a transparent substrate 50a is provided with an electrically conductive transparent layer 10a, an undercoating layer 60, a photosensitive layer 20, a charge transfer layer 30 and a transparent counter electrode layer 40a in this order, and then attached to a transparent substrate 50a. This structure allows light incidence from both sides of the photoelectric conversion device.

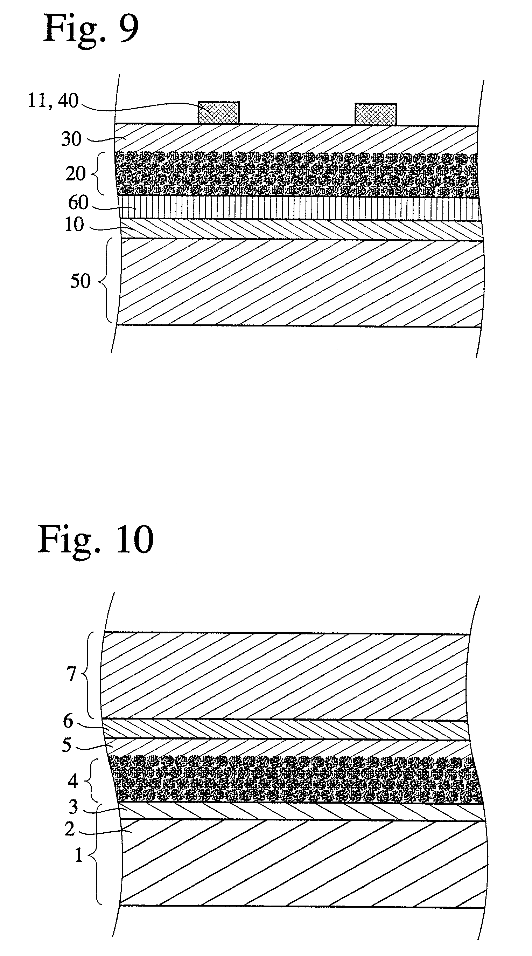

In the structure illustrated in Fig. 9, a substrate 50 is provided with an electrically conductive layer 10, an undercoating layer 60, a photosensitive layer 20, a solid charge transfer layer 30 in this order, and then partially provided with a counter electrode layer 40 or a metal lead 11. This structure allows light incidence from the side of the counter electrode.

### [3] Photoelectric cell

The photoelectric cell of the present invention comprises the above photoelectric conversion device of the present invention to do job or generate electricity in an external circuit. Such a photoelectric cell that has the charge transfer layer comprising the ion-conductive electrolytic composition is generally referred to as a photo-electrochemical cell. The photoelectric cell intended for generating power with solar light is referred to as a solar cell.

The edges of the photoelectric cell are preferably sealed with a polymer or an adhesive, etc. to prevent the cell content from deteriorating and evaporating. A known external circuit may be connected to the conductive support and the counter electrode via a lead.

When the photoelectric conversion device of the present invention is used for a solar cell, the interior structure of the solar cell may be essentially the same as that of the photoelectric conversion device mentioned above. The dye-sensitized solar cell comprising the photoelectric conversion device of the present invention may have essentially the same module structure as those of known solar cells. In the solar cell module, a cell is generally disposed on a substrate of metal, ceramic, etc. and covered with a packing resin, a protective glass, etc., whereby light is introduced from the opposite side of the substrate. The solar cell module may have a structure where the cell is placed on a substrate of a transparent material such as a tempered glass to introduce light from the transparent substrate side. Specifically, a superstraight-type module structure, a substrate-type module structure, a potting-type module structure, substrate-integrated module structure that is generally used in amorphous silicon solar cells, etc. are known as the solar cell module structure. The dye-sensitive solar cell comprising the photoelectric conversion device of the present invention may have a module structure properly selected from the above structures depending on ends, locations and environment where it is used, and preferably has a module structure disclosed in JP 2000-268892 A, etc.

The present invention will be explained in more detail with reference to Examples below without intention of restricting the scope of the present invention.

### Examples 1 to 12, Comparative Examples 1 to 3

### 1. Preparation of titanium dioxide dispersion

A dispersion of titanium dioxide particles, whose concentration was 11 % by mass, was prepared in the same manner as in the method described in Christophe J. Barb'e, et al, the Journal of American Ceramic Society, Vol. 80, No. 12, page 3157 (1997) except that an autoclave temperature was set at 230°C. The average particle diameter of the titanium dioxide particles in the dispersion was about 10 nm. Added to and mixed with this dispersion was polyethylene glycol (molecular weight: 20,000, available from Wako Pure Chemical Industries, Ltd) in an amount of 20% by mass based on the titanium dioxide, to obtain a dispersion of titanium dioxide particles.

### 2. Preparation of titanium dioxide electrode

The above dispersion of titanium dioxide particles was applied to an electrically conductive, transparent glass plate coated with fluorine-doped tin oxide (surface resistance: approximately 10 Ω/cm², available from Nippon Sheet Glass Co., Ltd.,) on the conductive layer side at a wet thickness of 120 µm by a doctor blade, and dried at 25°C for 30 minutes. Thereafter, it was burned at 450°C for 30 minutes in an electric furnace "muffle furnace FP-32" available from YAMATO SCIENTIFIC CO., LTD., and cooled to form a titanium dioxide layer, resulting in a titanium dioxide electrode. The amount of titanium dioxide coated per a unit area (1 m2) of the electrically conductive, transparent glass plate was 16.0 g/m², and the thickness of the titanium dioxide layer was about 11 µm.

### 3. Adsorption of dye and cathodic electrodeposition

The above titanium dioxide electrode was cut into a size of 10 mm x 12 mm on the condition that the size of titanium dioxide layer was 10 mm × 10 mm. The resultant titanium dioxide electrode was burned again at 450°C for 30 minutes in an electric furnace, and moved onto a hot plate at 100°C in a dry room for slow cooling. The resultant titanium dioxide electrode was then immersed in a dye adsorption liquid comprising the dye 1 shown below for 3 hours with vibration by a vibrator. The temperature of the dye adsorption liquid was 45°C, and the concentration of the dye 1 in the dye adsorption liquid was 0.3 mmol/L. Used as a solvent of the dye adsorption liquid was a mixed solvent of ethanol, 2-methyl-2-propanol and acetonitrile (volume ratio of ethanol / 2-methyl-2-propanol / acetonitrile was 1:1:2). After immersion, the dye-adsorbed titanium dioxide electrode was washed with ethanol and acetonitrile successively and dried in the dark in a nitrogen gas stream.

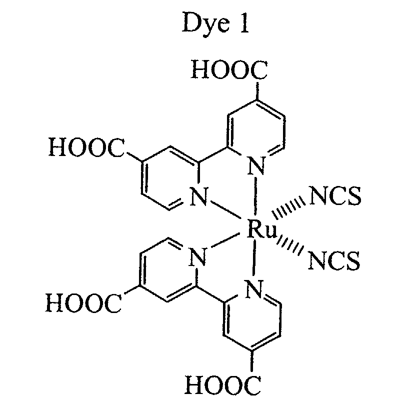

Next, by a three-pole method using a potentiostat with a platinum counter electrode and a reference electrode of silver / silver chloride, the above dye-adsorbed titanium dioxide electrode was subjected to cathodic electrodeposition. The cathodic electrodeposition conditions were such that a solution of 0.02 M of Zn(NO₃)₂ (metal nitrates) and 0.02 M of lithium nitrate in propylene carbonate was used as an electrolyte, that polarization voltage was -1.1 V, and that electrodeposition time was 30 seconds. The cathodic-electrodeposited, dye-adsorbed titanium dioxide electrode was washed with propylene carbonate and acetonitrile successively, and dried at 40°C for 5 hours to provide an electrode E-4.

Electrodes E-1 to E-3 and E-5 to E-15 were produced respectively in the same manner as in the above electrode E-4 except for changing metal nitrates, solvents, polarization voltage and electrodeposition time as shown in Table 1 blow. The cathodic-electrodeposited electrode was washed with a solvent used in the electrolyte and acetonitrile successively.

**Table 1**

| Electrode | Metal Nitrate Nitrate | Solvent | Polarization Voltage (vs. Ag/AgCl) | Electrodeposition Time (second) |
|---|---|---|---|---|
| E-1 | None | Propylene Carbonate | No | 30 |
| E-2 | Zn(NO₃)₂ | Propylene Carbonate | No | 30 |
| E-3 | Zn(NO₃)₂ | Water | No | 30 |
| E-4 | Zn(NO₃)₂ | Propylene Carbonate | -1.1 V | 30 |
| E-5 | Zn(NO₃)₂ | Propylene Carbonate | -0.9 V | 30 |
| E-6 | Zn(NO₃)₂ | Propylene Carbonate | -1.1 V | 60 |
| E-7 | Zn(NO₃)₂ | Acetonitrile | -1.1 V | 30 |
| E-8 | Zn(NO₃)₂ | Water | -1.1 V | 15 |
| E-9 | Zr(NO₃)₄ | Propylene Carbonate | -1.1 V | 30 |
| E-10 | Zr(NO₃)₄ | DMF | -0.9V | 120 |
| E-11 | Sc(NO₃)₃ | Acetonitrile | -1.1 V | 30 |
| E-12 | Ga(NO₃)₄ | Propylene Carbonate | -1.1 V | 60 |
| E-13 | Y(NO₃)₃ | Propylene Carbonate | -1.1 V | 30 |
| E-14 | In(NO₃)₃ | Propylene Carbonate | -1.1 V | 30 |
| E-15 | W(NO₃)₆ | DMF/Propylene Carbonate (1/1) | -1.1 V | 30 |

### 4. Production of photoelectric conversion device

Electrode E-1 was laminated on a platinum-vapor-deposited glass plate of 15 mm x 20 mm. Next, an electrolytic solution comprising 0.6 mol/L of 1,3-dimethylimidazolium iodide, 0.1 mol/L of lithium iodide and a solution of 0.05 mol/L of iodine in acetonitrile were permeated into a gap between the two glass plates by capillarity to obtain a photoelectric conversion device C-1 of Comparative Example 1. This photoelectric conversion device had a structure, in which a conductive glass plate 1 composed of a glass plate 2 and a conductive layer 3 laminated thereon, a dye-adsorbed titanium dioxide layer 4, a charge transfer layer 5, a platinum layer 6 and a glass plate 7 were laminated in this order, as shown in Fig. 10.

Photoelectric conversion devices C-2 and C-3 of Comparative Examples 2 and 3, and photoelectric conversion devices C-4 to C-15 of Examples 1-12 were produced in the same manner as in the photoelectric conversion device C-1 except that the electrode E-1 was replaced by those shown in Table 2.

### 5. Evaluation of photoelectric conversion efficiency

A simulated sunlight was obtained by passing light of a 500-W xenon lamp available from USHIO INC. through an "AM 1.5 filter" available from Oriel. The simulated sunlight had intensity of 100 mW/cm² in a vertical plane. A silver paste was applied to an edge of an electrically conductive glass plate in each of the photoelectric conversion devices C-1 to C-15 to form a negative electrode, and the negative electrode and a platinum-deposited glass plate as a positive electrode were connected to a current-voltage tester "Keithley SMU238." While vertically irradiating the simulated sunlight to each of photoelectric conversion devices C-1 to C-15, its current-voltage characteristics were measured to determine its photoelectric conversion efficiency. The photoelectric conversion efficiency of each of the photoelectric conversion devices C-1 to C-15 is shown in Table 2.

**Table 2**

| Note | Photoelectric Conversion Device | Electrode | Photoelectric Conversion Efficiency (%) |
|---|---|---|---|
| Comparative Example 1 | C-1 | E-1 | 6.4 |
| Comparative Example 2 | C-2 | E-2 | 6.4 |
| Comparative Example 3 | C-3 | E-3 | 5.6 |
| Example 1 | C-4 | E-4 | 8.2 |
| Example 2 | C-5 | E-5 | 7.7 |
| Example 3 | C-6 | E-6 | 7.8 |
| Example 4 | C-7 | E-7 | 8.1 |
| Example 5 | C-8 | E-8 | 7.4 |
| Example 6 | C-9 | E-9 | 7.8 |
| Example 7 | C-10 | E-10 | 7.2 |
| Example 8 | C-11 | E-11 | 8.0 |
| Example 9 | C-12 | E-12 | 7.8 |
| Example 10 | C-13 | E-13 | 7.9 |
| Example 11 | C-14 | E-14 | 7.6 |
| Example | C-15 | E-15 | 7.5 |

As shown in Table 2, the photoelectric conversion devices C-4 to C-15 of Examples 1-12 are excellent in photoelectric conversion efficiency, as compared with the photoelectric conversion devices C-1 to C-3 of Comparative Examples 1-3.

### Examples 13 to 28, Comparative Examples 4 to 7

### 1. Preparation of titanium dioxide dispersion

A dispersion of titanium dioxide particles, whose concentration was 11% by mass, was prepared in the same manner as in the method described in Christophe J. Barb'e, et al, the Journal of American Ceramic Society, Vol. 80, No. 12, page 3157 (1997) except that an autoclave temperature was set at 230°C. The average particle diameter of the titanium dioxide particles in the dispersion was about 10 nm. Added to and mixed with this dispersion was polyethylene glycol (molecular weight: 20,000, available from Wako Pure Chemical Industries, Ltd) in an amount of 20% by mass based on the titanium dioxide, to obtain a dispersion of titanium dioxide particles.

### 2. Preparation of titanium dioxide electrode

The above dispersion of titanium dioxide particles was applied to an electrically conductive, transparent glass plate coated with fluorine-doped tin oxide (surface resistance: approximately 10 Ω/cm², available from Nippon Sheet Glass Co., Ltd.,) on the conductive layer side at a wet thickness of 120 µm by a doctor blade, and dried at 25°C for 30 minutes. Thereafter, it was burned at 450°C for 30 minutes in an electric furnace "muffle furnace FP-32" available from YAMATO SCIENTIFIC CO., LTD., and cooled to form a titanium dioxide layer, resulting in a titanium dioxide electrode. The amount of titanium dioxide coated per a unit area (1 m²) of the electrically conductive, transparent glass plate was 16.0 g/m², and the thickness of the titanium dioxide layer was about 11 µm. The measurement of the resultant titanium dioxide layer by a BET method revealed that it had a roughness factor of about 1,000.

### 3. Cathodic electrodeposition and dye adsorption

The above titanium dioxide electrode was cut into a size of 10 mm x 12 mm on the condition that the size of titanium dioxide layer was 10 mm x 10 mm. Next, by a three-pole method using a potentiostat with a platinum counter electrode and a reference electrode of silver / silver chloride, the above dye-adsorbed titanium dioxide electrode was subjected to cathodic electrodeposition. The cathodic electrodeposition conditions were such that an aqueous solution containing 0.02 M of Zn(NO₃)₂ (metal nitrates), 0.02 M of lithium nitrate and 0.01 M of nitric acid was used as an electrolyte, that polarization voltage was -1.1 V, and that electrodeposition time was 30 minutes. The cathodic-electrodeposited titanium dioxide electrode was washed with water and acetonitrile successively, and burned at 450°C for 30 minutes. The weight of the layer of fine semiconductor particles per a unit area was increased to 17.5 g/m² by a cathodic electrodeposition treatment, though there was substantially no change in the roughness factor.

After burning, the cathodic-electrodeposited titanium dioxide electrode was cooled, and immersed in a dye adsorption liquid containing the same dye 1 as in Example 1 for 3 hours, during which the electrode was vibrated by an agitator. The temperature of the dye adsorption liquid was 45°C, and the concentration of the dye 1 in the dye adsorption liquid was 0.3 mmol/L. Used as a solvent of the dye adsorption liquid was a mixed solvent of ethanol, 2-methyl-2-propanol and acetonitrile (volume ratio of ethanol / 2-methyl-2-propanol / acetonitrile was 1:1:2). After immersion, the electrode was washed with ethanol and acetonitrile successively and dried in a nitrogen stream in a dark room to obtain a dye-adsorbed titanium dioxide electrode E-19.

Electrodes E-16 to E-18 and E-20 to E-35 were produced respectively in the same manner as in the above electrode E-19 except for changing metal nitrates for the electrolyte, solvents, polarization voltage and electrodeposition time as shown in Table 3 blow. The weight of the layer of fine semiconductor particles per a unit area of the electrode is shown in Table 3. Substantially no change was appreciated in the roughness factor as in E-19. The cathodic-electrodeposited electrode was washed with a solvent used in the electrolytic solution and acetonitrile in this order. In the case of producing the electrodes E-18, E-20 and E-23, a dye 1 was added to the electrolytic solution for cathodic electrodeposition in a concentration shown in Table 3.

**Table 3**

| Electrode | Metal Nitrate | Conc. of Dye 1 of (mM) | Solvent | Electrodeposition Conditions | Weight of Layer of Fine Semiconductor Particles (g/m²) |
|---|---|---|---|---|---|
| E-16 | None | 0 | Water | No | 16.0 |
| E-17 | Zn(NO₃)₂ | 0 | Water | No | 16.1 |
| E-18 | Zn(NO₃)₂ | 0.1 | Water | No | 16.1 |
| E-19 | Zn(NO₃)₂ | 0 | Water | -1.1 V, 30 mm. | 17.5 |
| E-20 | Zn(NO₃)₂ | 0.1 | Water | -1.1 V, 30 mm. | 17.5 |
| E-21 | Zn(NO₃)₂ | 0 | Carbonate 30 min. | -1.1 V, 30 mm. | 17.0 |
| E-22 | Zr(NO₃)₄ | 0 | Water | -1.1 V, 30 mm. | 17.2 |
| E-23 | Zr(NO₃)₄ | 0.1 | Water | -1.1 V, 30 mm. | 17.2 |
| E-24 | Ge(NO₃)₄ | 0 | Water | -1.1 V, 30 mm. | 16.8 |
| E-25 | Hf(NO₃)₄ | 0 | Water | -1.1 V, 30 mm. | 17.5 |
| E-26 | Sc(NO₃)₃ | 0 | Water | -1.1 V, 30 mm. | 17.0 |
| E-27 | Sn(NO₃)₄ | 0 | Water | -1.1 V, 30 mm. | 16.9 |
| E-28 | Y(NO₃)₃ | 0 | Water | -1.1 V, 30 mm. | 17.2 |
| E-29 | In(NO₃)₃ | 0 | Water | -1.1 V, 30 mm. | 17.1 |
| E-30 | W(NO₃)₆ | 0 | Water | -1.1 V, 30 mm. | 17.3 |
| E-31 | Ti(NO₃)₄ | 0 | Water | No | 16.3 |
| E-32 | Ti(NO₃)₄ | 0 | Water | -0.9 V, 5 min. | 17.0 |
| E-33 | Ti(NO₃)₄ | 0 | Water | -1.1 V, 5 mm. | 17.3 |
| E-34 | Ti(NO₃)₄ | 0 | Water | -1.1 V, 30 min. | 17.5 |
| E-35 | Ti(NO₃)₄ | 0 | Propylene Carbonate | -1.1 V, 30 min. | 17.2 |

### 4. Production of photoelectric conversion device

Electrode E-16 was laminated on a platinum-vapor-deposited glass plate of 15 mm x 20 mm. Next, an electrolytic solution comprising 0.6 mol/L of 1,3-dimethylimidazolium iodide, 0.1 mol/L of lithium iodide and a solution of 0.05 mol/L of iodine in acetonitrile were permeated into a gap between the two glass plates by capillarity to obtain a photoelectric conversion device C-16 of Comparative Example 4. This photoelectric conversion device had a structure, in which a conductive glass plate 1 composed of a glass plate 2 and a conductive layer 3 laminated thereon, a dye-adsorbed titanium dioxide layer 4, a charge transfer layer 5, a platinum layer 6 and a glass plate 7 were laminated in this order, shown in Fig. 10.

Photoelectric conversion devices C-17, C-18 and C-31 of Comparative Examples 5 to 7, and photoelectric conversion devices C-19 to C-30 and C-32 to C-35 of Examples 13 to 28 were respectively produced in the same manner as in the case of the photoelectric conversion device C-16 except for using electrodes shown in Table 4 in place of the electrode E-16.

### 5. Evaluation of photoelectric conversion efficiency

A simulated sunlight was obtained by passing light of a 500-W xenon lamp available from USHIO INC. through an "AM 1.5 filter" available from Oriel. The simulated sunlight had intensity of 100 mW/cm² in a vertical plane. A silver paste was applied to an edge of an electrically conductive glass plate in each of the photoelectric conversion devices C-16 to C-35 to form a negative electrode, and the negative electrode and a platinum-deposited glass plate as a positive electrode were connected to a current-voltage tester "Keithley SMU238." While vertically irradiating the simulated sunlight to each of photoelectric conversion devices C-16 to C-35, its current-voltage characteristics were measured to determine its photoelectric conversion efficiency. The photoelectric conversion efficiency of each of photoelectric conversion devices C-16 to C-35 is shown in Table 4.

**Table 4**

| Note | Photoelectric Conversion Device | Electrode | Photoelectric Conversion Efficiency (%) |
|---|---|---|---|
| Comparative Example 4 | C-16 | E-16 | 4.8 |
| Comparative Example 5 | C-17 | E-17 | 4.9 |
| Comparative Example 6 | C-18 | E-18 | 4.9 |
| Example 13 | C-19 | E-19 | 6.3 |
| Example 14 | C-20 | E-20 | 6.7 |
| Example 15 | C-21 | E-21 | 6.0 |
| Example 16 | C-22 | E-22 | 6.1 |
| Example 17 | C-23 | E-23 | 6.6 |
| Example 18 | C-24 | E-24 | 5.8 |
| Example 19 | C-25 | E-25 | 5.9 |
| Example 20 | C-26 | E-26 | 6.0 |
| Example 21 | C-27 | E-27 | 6.1 |
| Example 22 | C-28 | E-28 | 6.3 |
| Example 23 | C-29 | E-29 | 5.9 |
| Example 24 | C-30 | E-30 | 6.0 |
| Comparative Example 7 | C-31 | E-31 | 4.9 |
| Example 25 | C-32 | E-32 | 6.8 |
| Example 26 | C-33 | E-33 | 7.0 |
| Example 27 | C-34 | E-34 | 7.2 |
| Example 28 | C-35 | E-35 | 6.5 |

As shown in Table 4, the photoelectric conversion devices C-19 to C-30 and C-32 to C-35 of Examples 13 to 28 are excellent in photoelectric conversion efficiency, as compared with the photoelectric conversion devices C-16 to C-18, and C-31 of Comparative Examples 4 to 7.

As explained above in detail, in the present invention, the dye-sensitized photoelectric conversion device having excellent photoelectric conversion efficiency can be obtained by forming a metal oxide layer on a photosensitive layer of dye-adsorbed, fine semiconductor particles by cathodic electrodeposition.

## Claims

1. A photoelectric conversion device comprising a conductive support and a photosensitive layer formed on said conductive support, said photosensitive layer being composed of a layer of dye-adsorbed, fine semiconductor particles, and a metal oxide layer formed thereon by cathodic electrodeposition.

2. A method for producing a photoelectric conversion device having a photosensitive layer containing dye-adsorbed, fine semiconductor particles on a conductive support, comprising the step of forming a metal oxide layer on a layer of said fine semiconductor particles by cathodic electrodeposition.

3. A method for producing a film of fine semiconductor particles comprising the step of forming a metal oxide layer on a porous layer of fine semiconductor particles having a roughness factor of 10 or more by cathodic electrodeposition.

4. The method of claim 3 for producing a film of fine semiconductor particles, wherein said metal oxide layer is made of zinc oxide or titanium dioxide.

5. The method of claim 3 or 4 for producing a film of fine semiconductor particles, wherein said metal oxide layer is formed by cathodic electrodeposition in a titanium tetranitrate solution.

6. A photoelectric conversion device having a photosensitive layer on a conductive support, said photosensitive layer being composed of a porous layer of fine semiconductor particles having a roughness factor of 10 or more, and a metal oxide layer formed on said porous layer of fine semiconductor particles by cathodic electrodeposition, and a dye being adsorbed onto said porous layer of fine semiconductor particles.

7. The photoelectric conversion device of claim 6, wherein said metal oxide layer is made of zinc oxide or titanium dioxide.

8. A method for producing a photoelectric conversion device having a photosensitive layer on a conductive support, comprising the steps of (a) forming a porous layer of fine semiconductor particles having a roughness factor of 10 or more on said conductive support, (b) forming a metal oxide layer on said porous layer of fine semiconductor particles by cathodic electrodeposition, and then (c) causing a dye to be adsorbed onto said porous layer of fine semiconductor particles, thereby forming said photosensitive layer.

9. The method of claim 8 for producing a photoelectric conversion device, wherein said metal oxide layer is formed by cathodic electrodeposition in a titanium tetranitrate solution.

10. A photoelectric cell comprising a photoelectric conversion device recited in claim 6 or 7.
